# EUROPEAN PATENT APPLICATION

(11) **EP 2 109 030 A2**
(43) Date of publication of application: **14.10.2009**
(21) Application number: 09157614.0
(22) Date of filing: 08.04.2009
(51) Int. Cl.: G06F 1/32, G06F 3/041

(54) **Mobile terminal and screen control method thereof**

(30) Priority: 10.04.2008 KR 20080033353
(71) Applicant: LG Electronics Inc., Seoul 150-721 (KR)
(72) Inventor: Chung, Jin-Woo, Seoul (KR); Kim, Moon-Ju, Gyeonggi-Do (KR); Ryu, Hye-Jin, Seoul (KR); Lee, Dong-Seok, Seoul (KR)
(74) Representative: Cabinet Plasseraud

(57) **Abstract**

Disclosed are a mobile terminal and a screen control method thereof. The mobile terminal includes a display having a touch sensor and a proximity sensor configured to sense a user's touch or approach; and a controller for controlling brightness of a certain area according to a touch time or a proximity distance if the touch or approach of the pointing means is sensed. The present invention adjusts brightness of the certain area where the user's touch or approach is sensed, thereby allowing the user to check information only associated with the certain area without disturbing other people.

## Description

### BACKGROUND OF THE INVENTION

### 1. Field of the Invention

The present invention relates to a mobile terminal which adjusts brightness of a certain area where a touch or approach of a pointing means is sensed, and a screen control method thereof.

### 2. Description of the Background Art

A mobile terminal is a device which may be configured to perform various functions. Examples of such functions include data and voice communications, capturing images and video via a camera, recording audio, playing music files via a speaker system, and displaying images and video on a display. Some terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components which form the mobile terminal.

In general, a mobile terminal may be configured to illuminate an entire display area if it is operated to perform a specific function, and to stop a power supply to a display backlight if there is no inputting for a certain period of time or a mobile terminal is in a closed configuration.

For instance, if a user operates a mobile terminal to check information such as a text message received while watching a movie, the entire screen of the display is illuminated, which may disturb other people watching the movie. In addition, if a user needs to check personal information in a public space (e.g., a subway station, government and public offices or the like), such information is displayed on the entire display screen, thereby causing a leakage of personal information to another person.

### SUMMARY OF THE INVENTION

Therefore, one object of the present invention is to provide a mobile terminal capable of adjusting brightness of a certain area according to a proximity distance if an approach of a pointing means is sensed, and a screen control method thereof.

Another object of the present invention is to provide a mobile terminal capable of adjusting brightness of a certain area according to a touch time if a touch by a pointing means is sensed, and a screen control method thereof.

In addition, another object of the present invention is to provide a mobile terminal capable of adjusting a backlight on an area where an approach or touch by a pointing means is sensed, and a screen control method thereof.

In addition, another object of the present invention is to provide a mobile terminal capable of replacing color of another area, rather than a certain area where an approach or touch by a pointing means is sensed, with color having brightness of a lower level, and a screen control method thereof.

To achieve these and other advantages and in accordance with the purpose of the present invention, as embodied and broadly described herein, there is provided a mobile terminal, including: a display for sensing a touch or approach of a pointing means; and a controller for controlling brightness of a certain area according to a touch time or a proximity distance if the touch or approach of the pointing means is sensed.

The display includes a proximity sensor for sensing an approach of the pointing means; and a touch sensor for sensing a touch of the pointing means.

The controller gradually extends the certain area or gradually controls brightness of the certain area according to a time for which a proximity distance is uniformly maintained.

The controller executes a certain function corresponding to the certain area if a certain period of time has elapsed from the time for which the proximity distance is maintained.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a schematic block diagram of a mobile terminal according to one embodiment of the present invention;
Figure 2 is a front perspective view of a mobile terminal according to one embodiment of the present invention;
Figure 3 is a rear perspective view of a mobile terminal according to one embodiment of the present invention;
Figure 4 is an overview of a wireless communication system operable with the mobile terminal according to one embodiment of the present invention;
Figure 5 is a flowchart showing a screen control method of a mobile terminal according to one embodiment of the present invention;
Figure 6 shows an exemplary display screen of the mobile terminal in Fig. 5 according to the embodiment of the present invention;
Figure 7 is a flowchart showing a screen control method of a mobile terminal according to another embodiment of the present invention;
Figure 8 is a flowchart showing a screen control method of a mobile terminal according to still another embodiment of the present invention;
Figures 9A and 9B are respective exemplary views of a display screen when the mobile terminal in Fig. 8 executes a navigation system;
Figure 10 is an exemplary view of a display screen when the mobile terminal in Fig. 8 performs dialing;
Figure 11 is a flowchart showing a screen control method of a mobile terminal according to still another embodiment of the present invention;
Figure 12 is an exemplary view of a display screen of the mobile terminal in Fig. 11;
Figure 13 is a flowchart showing a screen control method of a mobile terminal according to still another embodiment of the present invention;
Figure 14 is an exemplary view showing a display screen of the mobile terminal according to still another embodiment of the present invention;
Figure 15 is an exemplary view showing a display screen of the mobile terminal according to still another embodiment of the present invention; and
Figures 16A and 16B are respective exemplary views of a display screen of a mobile terminal according to still another embodiment of the present invention.

### DETAILED DESCRIPTION OF THE INVENTION

Description will now be given in detail of the mobile terminal according to the preferred embodiments of the present invention, examples of which are illustrated in the accompanying drawings.

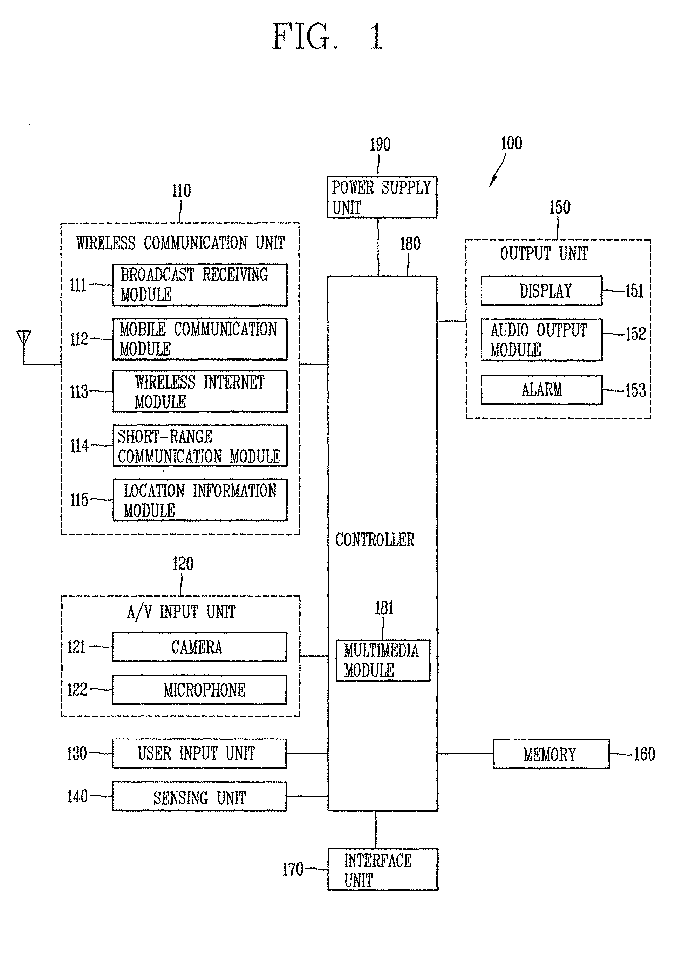

Figure 1 is a schematic block diagram of a mobile terminal according to one embodiment of the present invention.

A mobile terminal may be implemented using a variety of different types of terminals. Examples of such terminals include mobile phones, smart phones, notebook computers, digital broadcast terminals, Personal Digital Assistants (PDA), Portable Multimedia Players (PMP), navigation and the like.

The mobile terminal 100 may comprise components, such as a wireless communication unit 110, an Audio/Video (A/V) input unit 120, a user input unit 130, a sensing unit 140, an output unit 150, a memory 160, an interface 170, a controller 180, a power supply 190 and the like. Figure 1 shows the mobile terminal having various components, but it is understood that implementing all of the illustrated components is not a requirement. Greater or fewer components may alternatively be implemented.

Hereinafter, each component is described in sequence.

The wireless communication unit 110 may typically include one or more components which permit wireless communications between the mobile terminal 100 and a wireless communication system or between the mobile terminal 100 and a network within which the mobile terminal 100 is located. For example, the wireless communication unit 110 may include at least one of a broadcast receiving module 111, a mobile communication module 112, a wireless internet module 113, a short-range communication module 114 and a location information module 115.

The broadcast receiving module 111 receives a broadcast signal and/or broadcast associated information from an external broadcast managing server via a broadcast channel. The broadcast channel may include a satellite channel and a terrestrial channel. The broadcast managing server may indicate a server which generates and transmits a broadcast signal and/or broadcast associated information or a server which receives a pre-generated broadcast signal and/or broadcast associated information and sends them to the mobile terminal. Examples of broadcast associated information may include information associated with a broadcast channel, a broadcast program, a broadcast service provider, and the like. The broadcast signal may be implemented as a TV broadcast signal, a radio broadcast signal, and a data broadcast signal, among others. The broadcast signal may further include a data broadcast signal combined with a TV or radio broadcast signal.

The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video call signal, or various formats of data according to transmission/reception of text/multimedia messages.

The wireless internet module 113 supports wireless Internet access for the mobile terminal. This module may be internally or externally coupled to the mobile terminal.

The short-range communication module 114 denotes a module for short-range communications. Suitable technologies for implementing this module may include BLUETOOTH, Radio Frequency IDentification (RFID), Infrared Data Association (IrDA), Ultra-WideBand (UWB), ZigBee, and the like.

The location information module 115 denotes a module for detecting or calculating a position of a mobile terminal. An example of the location information module 115 may include a Global Position System (GPS) module. The GPS module may receive position information in cooperation with associated multiple satellites. Here, the position information may include coordinates information represented by latitude and longitude. For example, the GPS module can measure accurate time and distance respectively from more than three satellites so as to accurately calculate a current position of the mobile terminal based on such three different distances according to a triangulation scheme. A scheme may be used to obtain time information and distance information from three satellites and correct error by one satellite. Specifically, the GPS module can further obtain three-dimensional speed information and an accurate time, as well as position on latitude, longitude and altitude, from the position information received from the satellites.

The A/V input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display 151.

The image frames processed by the camera 121 may be stored in the memory 160 or transmitted to the exterior via the wireless communication unit 110. Two or more cameras 121 may be provided according to the configuration of the mobile terminal.

The microphone 122 may receive an external audio signal via a microphone while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data inputted by a user to control the operation of the mobile terminal. The user input unit 130 may include a keypad, a dome switch, a touchpad (e.g., static pressure/capacitance), a jog wheel, a jog switch and the like. A specific example can be one in which the touchpad is layered with the display 151 to be explained later so as to be in cooperation with the display 151, which is referred to as a touch screen.

The sensing unit 140 provides status measurements of various aspects of the mobile terminal. For instance, the sensing unit 140 may detect a current state of the mobile terminal, such as an open/close status of the mobile terminal 100, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, for a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device.

The interface 170 is generally implemented to couple the mobile terminal 100 to external devices. The interface unit 170 may include, for example, wired/wireless headset ports, external charger ports, wired/wireless data ports, memory card ports, ports for coupling devices having an identification module, etc.), audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), a Universal Subscriber Identity Module (USIM), and the like. Also, the device having the identification module (hereinafter, referred to as 'identification device') may be implemented in a type of smart card. Hence, the identification device can be coupled to the mobile terminal 100 via a port. Such interface 170 may receive data from an external device, or provided with power and accordingly transfer the received data or power to each component within the mobile terminal 100 or transfer data of the mobile terminal 100 to an external device.

The output unit 150 is configured to output an audio signal, a video signal or an alarm signal. The output unit 150 may include the display 151, an audio output module 152, an alarm 153, and the like.

The display 151 may output information processed in the mobile terminal 100. For example, when the mobile terminal is operating in a phone call mode, the display 151 will provide a User Interface (UI) or a Graphic User Interface (GUI) which includes information associated with the call. As another example, if the mobile terminal 100 is in a video call mode or a capturing mode, the display 151 may additionally or alternatively display images captured and/or received, UI, or GUI.

Meanwhile, as mentioned above, a touch screen can be configured as the display 151 and the touchpad are layered with each other to work in cooperation with each other. This configuration permits the display 151 to function both as an input device and an output device. The display 151 may be implemented using at least one of, for example, a Liquid Crystal Display (LCD), a Thin Film Transistor-Liquid Crystal Display (TFT-LCD), an Organic Light-Emitting Diode (OLED), a flexible display, a three-dimensional (3D) display, a transparent display, or the like. The mobile terminal 100 may include two or more of such displays 151 according to its embodiment. For example, the mobile terminal 100 may simultaneously include an external display (not shown) and an internal display (not shown).

The audio output module 152 may output audio data which is received from the wireless communication unit 110 in various modes including call-receiving mode, call-placing mode, recording mode, voice recognition mode, broadcast reception mode, and the like, or audio data stored in the memory 160. Also, the audio output module 152 may output an audio signal relating to a particular function (e.g., call received, message received, etc.) performed in the mobile terminal 100. The audio output module 152 may be implemented using a speaker, a buzzer, or the like.

The alarm 153 may provide outputs to inform about the occurrence of an event of the mobile terminal 100. Typical events may include a call signal reception, a message reception, a key signal input, and the like. In addition to audio or video outputs, the alarm 153 may provide outputs in a different manner to inform about the occurrence of an event. For example, the alarm 153 may provide outputs in the form of vibrations (or other tactile means). When a call signal, a message, or some other incoming communication is received, the alarm 153 may provide tactile outputs (i.e., vibrations) to inform the user. By providing tactile outputs, the user can recognize the occurrence of various events. Outputs informing about the occurrence of an event may be also provided via the display 151 or the audio output module 152.

The memory 160 may store a program for the processing and control of the controller 180. Alternatively, the memory 160 may temporarily store input/output data (e.g., phonebook data, messages, still images, video and the like).

The memory 160 may include at least one type of storage medium including a flash memory type, a hard disk type, a multimedia card micro type, a memory card type (e.g., SD or XD memory), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, optical disk, and the like. Also, the mobile terminal 100 may cooperate with a web storage device on the Internet that remotely performs the storage function of the memory 160.

The controller 180 typically controls the general operations of the mobile terminal. For example, the controller 180 performs controlling and processing associated with voice calls, data communications, video calls, and the like. In addition, the controller 180 may include a multimedia module 181 for reproducing multimedia data. The multimedia module 181 may be implemented integrally within the controller 180 or by software executed therein, or may be configured separately from the controller 180.

The power supply 190 receives external or internal power and supplies power required for the operations of the respective elements under the control of the controller 180.

Various functionalities described herein may be implemented in a computer-readable medium using, for example, computer software, hardware, or any combination thereof.

For a hardware implementation, the functionalities described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electronic units designed to perform the functions described herein. In some cases, such functionalities may be implemented by the controller 180.

For a software implementation, the functionalities such as operation procedures or functions may be implemented together with separate software modules that allow performing of at least one function or operation. Software codes can be implemented by a software application written in any suitable programming language. The software codes may be stored in the memory 160 and executed by the controller 180.

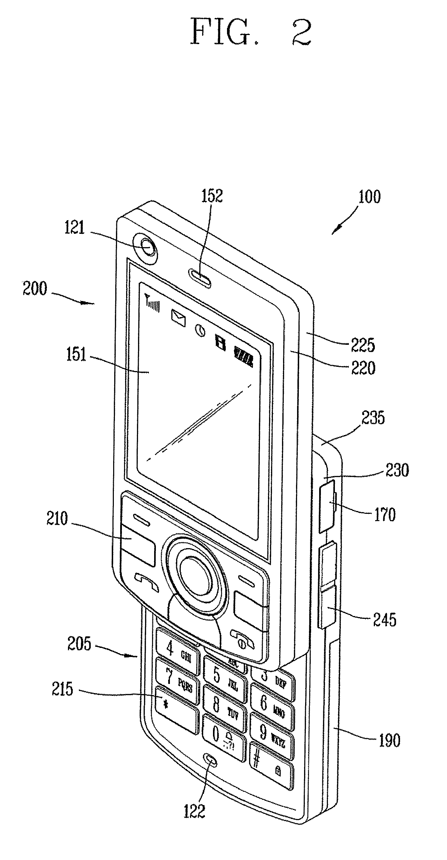

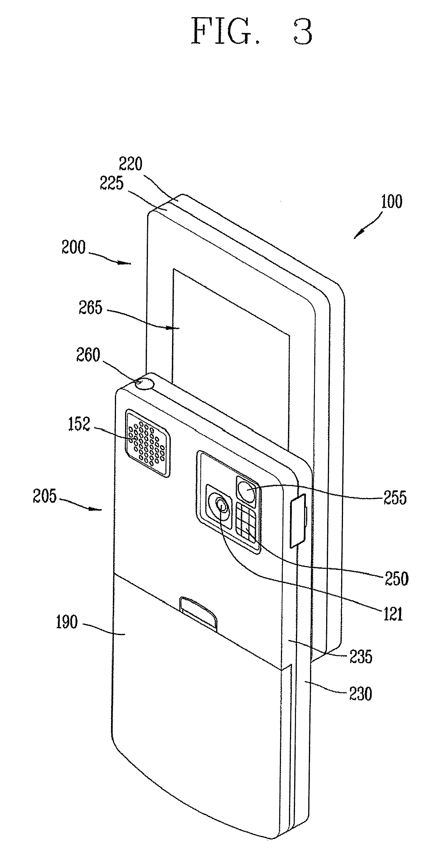

So far, the mobile terminal has been described from the perspective of its functions. Hereinafter, external elements of the mobile terminal will be described from the perspective of their functions with reference to Figs. 2 and 3. The mobile terminal may be implemented in a variety of different configurations. Examples of such configurations include a folder-type, a bar-type, a swing-type, a slide-type and combinations thereof. For clarity, further description will primarily relate to a slide-type mobile terminal. However such teachings apply equally to other types of mobile terminals.

Figure 2 is a front perspective view of a mobile terminal according to one embodiment of the present invention.

The mobile terminal according to the present invention includes a first body 200 and a second body 205 disposed to be slidably movable along at least one direction relative to one another.

A state in which the first body 200 is disposed to overlap with or overlie the second body 205 may be called a "closed configuration," and as shown in the drawing, a state in which the first body 200 and second body 205 are so disposed relative one another as to expose at least a portion of the second body 205 may be called an "opened configuration."

In the closed configuration, the mobile terminal mainly operates in a standby mode (idle mode), and the standby mode may be released according to a user manipulation. The mobile terminal operates mainly in the calling mode or the like in the opened configuration, and it can be changed to the standby mode with the lapse of a certain time period or a user manipulation.

The case (a casing, a housing, a cover, etc.) constituting the external appearance of the first body 200 is formed by a first front case 220 and a first rear case 225. Various electronic components are installed in a space between the first front case 220 and the first rear case 225. One or more intermediate cases may be additionally disposed between the first front case 220 and the first rear case 225.

The cases may be formed by injection-molding a synthetic resin or may be made of a metallic material such as stainless steel (STS) or titanium (Ti), and the like.

The display 151, an audio output module 152, a camera 121 or a first user input unit 210 may be located on the first body 200, specifically, on the first front case 220 of the first body 200.

The display 151 may include an Liquid Crystal Display (LCD), an Organic Light Emitting Diode (OLED) display, etc. that visually displays information.

A touch pad may be overlaid in a layered manner on the screen of the display 151 to allow the display 151 to function as a touch screen to enable the inputting of information by a user's touch.

The audio output module 152 may be implemented in the form of a receiver or a speaker.

The camera 121 may be implemented to be suitable for capturing images or video with respect to the user and so on.

Like the first body 200, the case constituting the external appearance of the second body 205 is formed by a second front case 230 and a second rear case 235.

A second user input unit 215 may be disposed on a front face of the second body 205, specifically, on the second front case 230.

A third user input unit 245, the microphone 122, and the interface 170 may be disposed on at least one of the second front case 230 and the second rear case 235.

The first to third user input units 210, 215, and 245 may be generally referred to as the manipulation unit 130, and various techniques can be employed for implementing the manipulation unit so long as they can be operated by a user in a tactile manner.

For example, the user input units can be implemented with a dome switch or touch pad that can receive user commands or information according to a user's pressing, pushing or touching, or implemented in the form of a wheel that rotates a key, a jog element, a joystick, or the like.

In terms of their functions, the first user input unit 210 is used for inputting commands such as start, end, scroll or the like, and the second user input unit 215 is used for inputting numbers, characters, symbols, or the like.

Also, the third user input unit 245 may operate as a hot key for activating a particular function within the mobile terminal.

The microphone 122 may be implemented in a form suitable to transduce the voice of a user, other sounds, or the like.

The interface 170 may be used as a link (passage or path) through which the mobile terminal can exchange data or the like with an external device. For example, the interface 170 may be implemented as at least one of a connection port for connecting an earphone to the mobile terminal via a wired (fixed) or wireless means, a port for short-range communications (e.g., an Infrared Data Association (IrDA) port, a BluetoothTM port, a wireless LAN port, etc.), power supply ports for providing power to the mobile terminal, or the like.

The interface 170 may be configured using a card socket (e.g., for coupling to an external card including a subscriber identity module (SIM) card, a user identity module (UIM) card, and a memory card for information storage.

The power supply 190 for supplying power to the mobile terminal is located at a side portion of the second rear case 235.

The power supply 190 may be, for example, a rechargeable battery that can be detached.

Figure 3 is a rear view of the mobile terminal in Fig. 2.

Referring to Fig. 3, a camera 121 may additionally be disposed on a rear surface of the second rear case 235 of the second body 205. The camera 121 of the second body 205 may have an image capture direction which is substantially the opposite to that of the camera 121 of the first body 200, and may support a different resolution, image size, or number of pixels as compared to the first camera module.

For instance, the camera 121 of the first body 200 may operate with a relatively lower resolution to capture images of a user's face and transmit the same to the other party during video call communication or the like, while the camera 121 of the second body 205 may operate with a relatively higher resolution to capture images of general subjects with high picture quality not for immediately being transmitted but for later use or for communicating to others.

A flash 250 and a mirror 255 may be additionally disposed adjacent to the camera 121 of the second body 205. When an image of a subject is to be captured with the camera 121 of the second body 205, the flash 250 illuminates the subject. The mirror 255 allows a user to see themselves when they want to capture their own image (self-image capturing) by using the camera 121 of the second body 205.

The second rear case 235 may further include an audio output module 152.

The audio output module 152 of the second body 205 may implement a stereophonic sound function in conjunction with the audio output module 152 of the first body 200 and may be also used for sending and receiving audio calls in a speaker phone mode.

A broadcast signal receiving antenna 260 may be disposed at one side or region of the second rear case 235, in addition to an antenna that supports mobile communications. The antenna 260 can be configured to be retractable from the second body 205.

One part of a slide module 265 that slidably combines the first body 200 and the second body 205 may be disposed on the first rear case 225 of the first body 200.

The other part of the slide module 265 may be disposed on the second front case 230 of the second body 205, which may not be exposed as shown in the drawing.

In the above description, the second camera 121 and so on is disposed on the second body 205, but such a described configuration is not meant to be limiting.

For instance, one or more of the elements (e.g., 260, 121, 250 and 152), which are disposed on the second rear case 235 in the above description, may be mounted on the first body 200, mainly, on the first rear case 225. In this case, those elements disposed on the first rear case 225 can be protected (or covered) by the second body 205 in the closed configuration. In addition, even if the camera 121 of the second body 205 is not provided, the camera 121 of the first body 200 may be configured to rotate (or otherwise be moved) to thus allow image capturing in various directions.

The mobile terminal 100 as shown in Figs. 1 through 3 may be configured to operate within a communication system which transmits data via frames or packets, including both wireless and wired communication systems, and satellite-based communication systems.

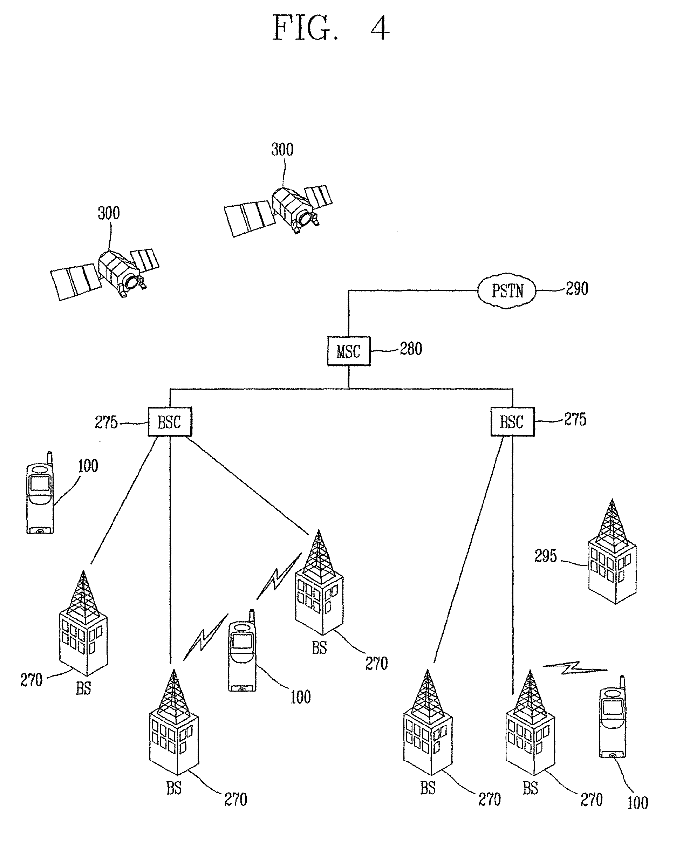

Hereinafter, referring to Fig. 4, description of the communication system in which the mobile terminal can be operated according to the present invention will be given in detail.

Such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, and the Global System for Mobile communications (GSM). By way of non-limiting example only, further description will relate to a CDMA communication system, but such teachings apply equally to other system types.

Referring now to Fig. 4, a CDMA wireless communication system is shown having a plurality of mobile terminals 100, a plurality of base stations 270, Base Station Controllers (BSCs) 275, and a Mobile Switching Center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with at least one of several known interfaces including, for example, E1/T1, ATM, IP, PPP, Frame Relay, HDSL, ADSL, or xDSL. It is to be understood that the system as shown in Fig. 4 may include a plurality of BSCs 275.

Each base station 270 may include one or more sectors, each sector having an omni-directional antenna or an antenna pointed in a particular direction radially away from the base station 270. Alternatively, each sector may include two or more antennas for diversity reception. Each base station 270 may be configured to support a plurality of frequency assignments, with each frequency assignment having a particular spectrum (e.g., 1.25 MHz, 5 MHz).

The intersection of a sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted "cell sites." Alternatively, individual sectors of a given base station 270 may be referred to as cell sites.

As shown in Fig. 4, a Broadcasting Transmitter (BT) 295 is shown broadcasting to mobile terminals 100 operating within the system. The broadcast receiver module 111 as shown in Fig. 1 is typically configured to receive broadcast signals transmitted by the BT 295.

In addition, Figure 4 depicts several Global Positioning System (GPS) satellites 300. Such satellites 300 facilitate locating the position of some or all of the mobile terminals 100. Two satellites are depicted, but it is understood that useful positioning information may be obtained with greater or fewer satellites. The GPS module 115 (Fig. 1) is typically configured to cooperate with the satellites 300 to obtain desired position information. It is to be understood that other types of position detection technology, (i.e., location technology that may be used in addition to or instead of GPS location technology) may alternatively be implemented. If desired, at least one of GPS satellites 300 may alternatively or additionally be configured to provide satellite DMB transmissions.

During typical operation of the wireless communication system, the Base Stations 270 receive sets of reverse-link signals from various mobile terminals 100. The mobile terminals 100 are engaging in calls, messaging, and other communications. Each reverse-link signal received by a given base station 270 is processed within that base station. The resulting data is forwarded to an associated BSC 275. The BSC 275 provides call resource allocation and mobility management functionality including the orchestration of soft handoffs between base stations 270. The BSCs 275 also route the received data to the MSC 280, which provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

Hereinafter, descriptions of a schematic configuration of the mobile terminal according to the present invention will be given in detail with reference to Figs. 1 through 3.

The mobile terminal 100 according to the present invention may include the wireless communication unit 110, the user input unit 130, the display 151, the audio output module 152, the memory 160, the controller 180 and the like.

The wireless communication unit 110 permits wireless communication between the mobile terminal 100 and a wireless communication system or network within which the mobile terminal is located.

The user input unit 130 generates input data to perform a control of the operations of the mobile terminal 100 responsive to user manipulation. The user input unit 130 may include a dome switch, a touchpad, a jog wheel and a jog switch. If the user input unit 130 is configured as a touch screen display in which the touch pad is overlaid on the display 151 in a layered manner, the variety of input keys may be implemented as an application icon.

The display 151 displays a variety of information generated by the operations performed in the mobile terminal 100, and may include a sensor for sensing a user's touch and/or approach. The user may input a command or information by utilizing a pointing means (e.g., user's finger, a stylus, a light pen, etc.) used to point a location. That is, the user approaches or touches the display screen of the display 151 by using the pointing means, thereby being able to select a desired menu item or generate a figure or picture.

In addition, the display 151 may include a proximity sensor for sensing an approach of the pointing means and a touch sensor for sensing a touch by the pointing means. That is, the display 151 may be implemented with the sensing unit 140 capable of sensing the approach and touch by the pointing means.

The proximity sensor may detect and output a distance between the pointing means and the sensor based on capacitance which varies by a proximity distance of the pointing means, and output location information of a position to be proximate by the pointing means. This exemplary embodiment has described a capacitance type proximity sensor, however, various types of proximity sensors may also be used.

The touch sensor outputs location information of a certain area where a touch by the pointing means is sensed as coordinates. The touch sensor may be implemented as a touch panel in the form of static pressure, capacitance or the like. A touch screen may be configured when the touch panel is overlaid on the display 151 in a layered manner. Therefore, the display 151 functions as a display device as well as an input device.

The audio output module 152 outputs audio data which is received from the wireless communication unit 110 in various modes including call-receiving mode, call-placing mode, recording mode, voice recognition mode, broadcast reception mode, and the like, or audio data stored in the memory 160. Also, the audio output module 152 outputs an audio signal (e.g., a confirmation sound, an alerting sound) relating to a particular function performed in the mobile terminal 100.

The memory 160 stores various types of data to support the processing, control, and storage requirements of the mobile terminal 100. In addition, the memory 160 may store an audio signal corresponding to an icon displayed on the display 151, and a table where different levels of brightness based on a distance between the pointing means and the sensor or a touch time are defined. Alternatively, the memory 160 may store a table defining a function (input key) corresponding to a location where a user's touch or approach is sensed.

If an approach and/or touch by the pointing means are sensed, the controller 180 changes a brightness level in a certain area (proximity area and touch area) of the display 151. The certain area refers to an area within a certain radius based on a coordinate corresponding to the proximity or touch area detected by the sensor. The certain radius may be a preset value as default or a value set by a user's menu manipulation.

In addition, the controller 180 gradually adjusts a brightness level of a certain area where a user's touch or approach is sensed, based on the proximity distance or the touch time detected by the sensor. For instance, if a proximity distance between the pointing means and the sensor is gradually reduced, the certain area becomes brighter, and conversely, if the proximity distance becomes increased, the certain area becomes dimmed. Alternatively, if the proximity distance between the pointing means and the sensor increases, the certain area becomes brighter, and conversely, if the proximity distance is gradually reduced, the certain area becomes dimmed.

In addition, the controller 180 gradually brightens the certain area in length of time for which the user's touch is maintained. The controller 180 gradually dims the certain area if the user's touch is released.

That is, the mobile terminal 100 according to the present invention provides a searchlight effect to the certain area where the user's touch or approach is sensed, thereby allowing the user to check information displayed on the certain area only among the information displayed on the entire display screen of the display 151.

The controller 180 displays information corresponding to the certain area where the user's touch or approach is sensed, and replaces color (e.g., dark gray) of information displayed on another area, other than the certain area, with color (e.g., light gray) having brightness of a lower level. Thusly, the entire display screen dims, and the proximity or touch area becomes brighter through luminosity contrast. That is, the controller 180 performs a process in which information displayed in a dark color on another area, other than the certain area where the user's touch or approach is sensed, is overlapped onto the information displayed on the display 151. Accordingly, the user may selectively check information only corresponding to the certain area where the user's touch or approach is sensed.

The controller 180 lowers the brightness of another area, other than a certain area where an approach or touch by the pointing means is sensed, and simultaneously, adjusts the brightness of the backlight of the display 151 according to a distance between the pointing means and the sensor, a touch time or a holing time for maintaining a certain distance between the pointing means and the sensor, thus to control the backlight brightness of the display 151. Therefore, the brightness level of the certain area may be changed by the distance detected by the proximity sensor and the touch time. Accordingly, when a lighting of the display 151 is turned off, the searchlight effect may be provided to the area where the user's touch or approach is sensed. When the lighting of the display 151 is turned on, a highlighting effect may be provided to the certain area.

Meanwhile, the controller 180 may change the brightness of the certain area if an approach or touch by the pointing means is sensed when an external key, such as a hot key and a function key, is pressed. The controller 180 may gradually extends the certain area according to the touch time or the proximity distance.

Hereinafter, descriptions of a method for controlling, by the controller 180, the brightness of the certain area where the user's approach is sensed will be given in detail.

First, if the display 151 is implemented as a self-light emitting diode, the controller 180 controls the brightness of a certain area by performing a control of the power supplied to a light emitting diode of the certain area where the user's touch or approach is sensed. In other words, when the light emitting diodes flicker, power is supplied to the light emitting diode of the certain area where the users' touch or approach is sensed.

Next, if the display 151 is implemented as a general display device having a backlight, the controller 180 controls the brightness of the backlight by replacing color of information displayed on another area rather than the certain area where the user's touch or approach is sensed, with color having brightness of a lower level.

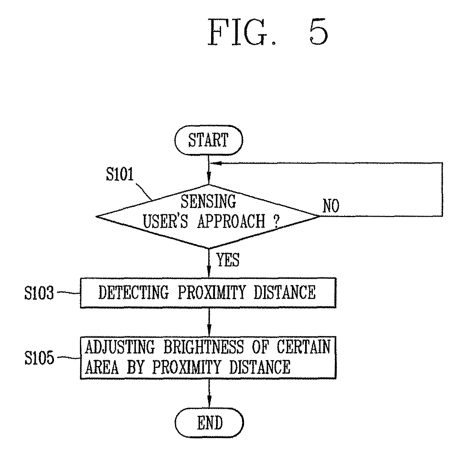

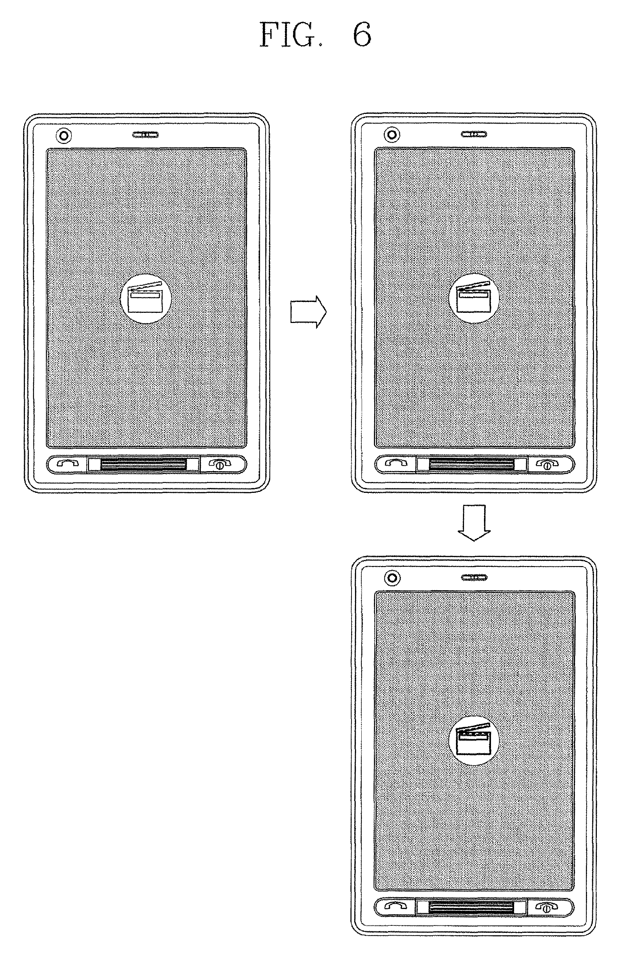

Figure 5 is a flowchart showing a screen control method of a mobile terminal according to one embodiment of the present invention, and Figure 6 shows an exemplary display screen of the mobile terminal in Fig. 5 according to the embodiment of the present invention.

In a standby state in which a display lighting is turned off, a user first activates a searchlight function to check information, such as a previously received message, memo, or the like. Here, the searchlight function refers to a function to brightly illuminate a certain area where a user's touch or approach is sensed. The searchlight function may be implemented as a toggle key disposed outside the mobile terminal 100 or set by a menu manipulation.

After the searchlight function has been activated, if a pointing means is used to approach the display 151, a sensor provided in the display 151 senses an approach of the pointing means (S101). The pointing means may include a user's finger, a stylus, a light pen and the like.

If the approach of the pointing means is sensed, the display 151 detects a proximity distance between the pointing means and the display 151 (S103). Here, the display 151 may detect and output location information of a certain area where the approach of the pointing means is sensed. Having received an inputting of the proximity distance and the location information from the display 151, the controller 180 gradually controls, based on the proximity distance, brightness of the certain area where the approach of the pointing means is sensed (S105). The certain area refers to an area within a certain radius based on the area where the user's approach is sensed.

Here, the controller 180 adjusts a backlight of the display 151 which corresponds to the area where the approach of the pointing means is sensed, thus to adjust the brightness of the sensed area.

Meanwhile, the controller 180 replaces color of information displayed on another area, rather than the area where the approach of the pointing means is sensed, with color having brightness of a lower level, thereby having an effect of illuminating the sensed area only.

Since the controller 180 adjusts the backlight of the display 151 while replacing the color, the controller 180 may adjust the brightness of the area where the approach of the pointing means is sensed.

For instance, if a user uses his finger to approach the display 151 so as to reproduce a moving image file, the display 151 detects the proximity distance of the user and transfers the same to the controller 180. As the proximity distance becomes closer, the controller 180 increases amperage to be supplied to the backlight of the display 151 for illuminating the certain area. Consequently, the brightness of the certain area is gradually increased as shown in Fig. 6.

This exemplary embodiment has described a case in which the brightness of the certain area is gradually increased as the proximity distance of the user becomes closer. Conversely, it may also be configured such that as the proximity distance of the user becomes increased, the brightness of the certain area is gradually reduced.

The display 151 increases the brightness of the certain area and displays information displayed on the certain area under the control of the controller 180. That is, the mobile terminal 100 displays information only displayed on the certain area approached by the pointing means among the entire display screen of the display 151. Accordingly, the user may check desired information by the display illumination, without disturbing another person, in a dark place such as a movie theater.

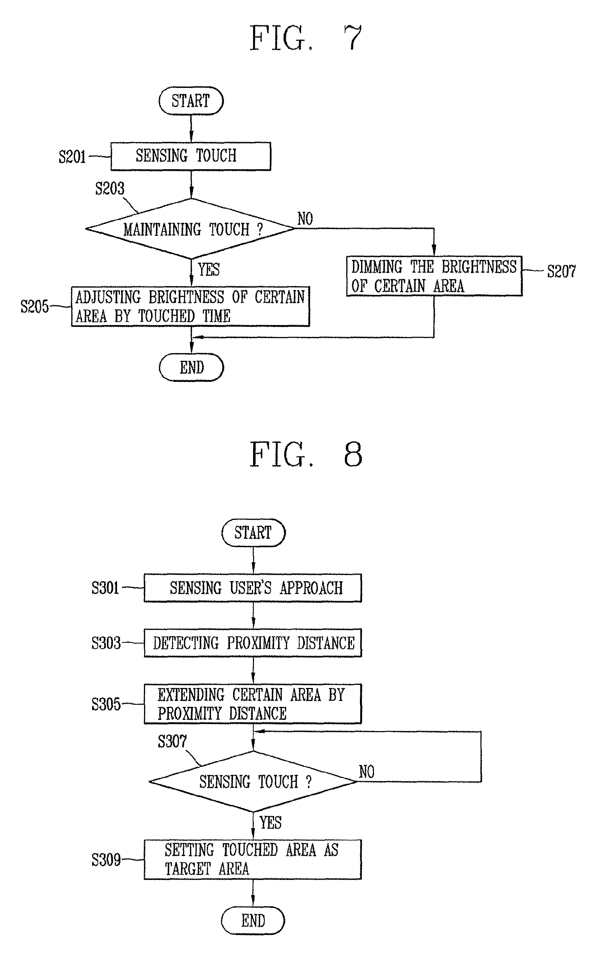

Figure 7 is a flowchart showing a screen control method of a mobile terminal according to another embodiment of the present invention. This exemplary embodiment has described a case of adjusting brightness of a certain area according to a time for being touched.

If the user touches a certain position on the display screen of the display 151 by his finger so as to check certain information, the display 151 transmits location information of the touched position to the controller 180 (S201). Here, if a touch by the user's finger is sensed, the controller 180 activates a counter.

The controller 180 checks whether or not the user's touch continues to be sensed (S203). That is, the mobile terminal 100 checks whether or not the user's touch continues. If the user's touch continues to be sensed, the controller 180 controls the brightness of the certain area based on the time for being touched by the user (S205). For instance, if the user's touch continues, the controller 180 increases the brightness of the certain area by one level each time a certain period of time has elapsed.

Meanwhile, if the user's touch is released, the controller 180 performs a control of the display 151 so as to gradually reduce the brightness of the certain area (S207). Accordingly, if the user's touch is released, the brightness of the certain area is dimmed.

Alternatively, if the user's touch is released, the controller 180 may stop the power supply to the display 151, thus to stop highlighting the certain area.

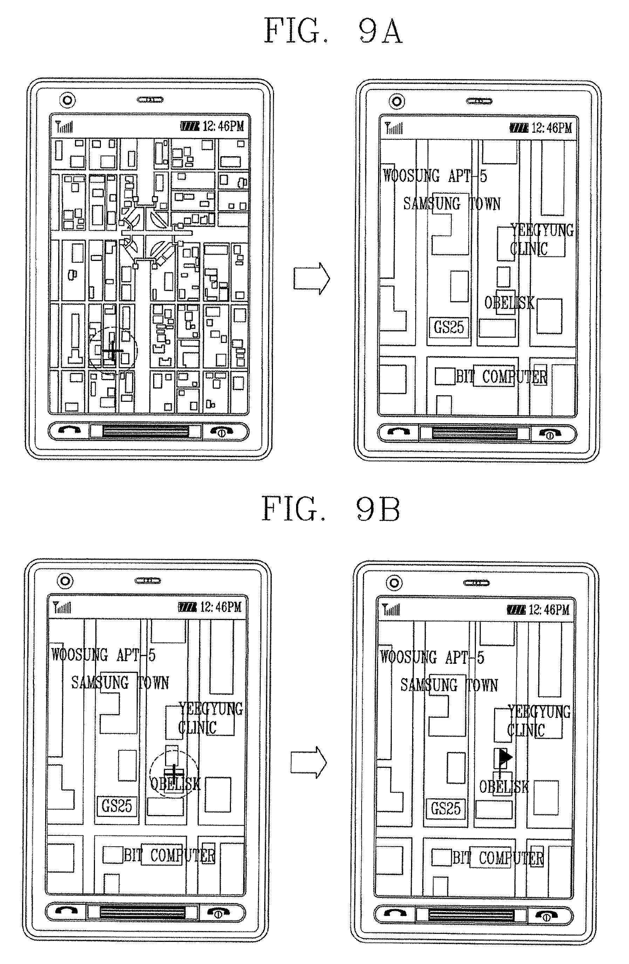

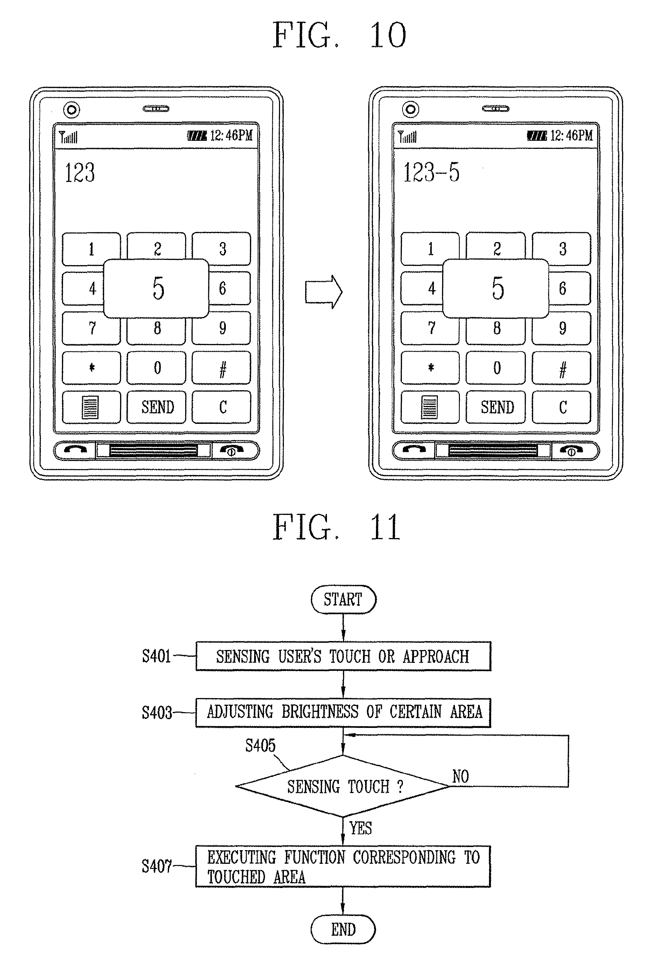

Figure 8 is a flowchart showing a screen control method of a mobile terminal according to still another embodiment of the present invention, Figures 9A and 9B are respective exemplary views of a display screen when the mobile terminal in Fig. 8 executes a navigation system, and Figure 10 is an exemplary view of a display screen when the mobile terminal in Fig. 8 performs dialing.

Hereinafter, a case of enlarging or reducing a certain area responsive to an approach of the pointing means will be described in detail with reference to the accompanying drawings.

While a navigation system is executed, if the user's finger approaches a certain position of the display 151, the display 151 senses the approach of the user's finger, detects a proximity distance of the user's finger and location information of the certain area, and then transmits the same to the controller 180 (S301, S303).

Based on the detected proximity distance, the controller 180 enlarges information corresponding to the certain area at a certain rate as shown in Fig. 9A (S305). For instance, as the user's finger approaches the display screen of the display 151, the controller 180 enlarges the certain area by degrees. The controller 180 of the mobile terminal 100 according to the present invention increases the certain area by double, treble, quadruple ... each time the distance between the user's finger and the display 151 reduces by 0.1 cm.

When the certain area is enlarged and if a user's touch input is generated, the display 151 senses the user's touch input and outputs location information of the certain area (S307). The controller 180 sets the certain area where the user's touch is sensed as a target area (S309). For instance, as shown in Fig. 9B, if the user's touch input is generated when the certain area is enlarged, the certain area named 'Obelisk' where the touch is sensed is set as a target area.

This exemplary embodiment has described that if the user's approach is sensed while the navigation system is executed, the certain area is enlarged or reduced according to the proximity distance. However, as shown in Fig. 10, if a user's approach is sensed when a call is placed, a button associated with the certain area is enlarged at a certain ratio based on the proximity distance, and if a user's touch is sensed while the button is enlarged, the mobile terminal 100 receives an inputting of information allotted to the corresponding button. For instance, when a button '5' is touched while the button is enlarged as shown in the drawing, the controller 180 displays information (the number '5') corresponding to the touched button on the display 151.

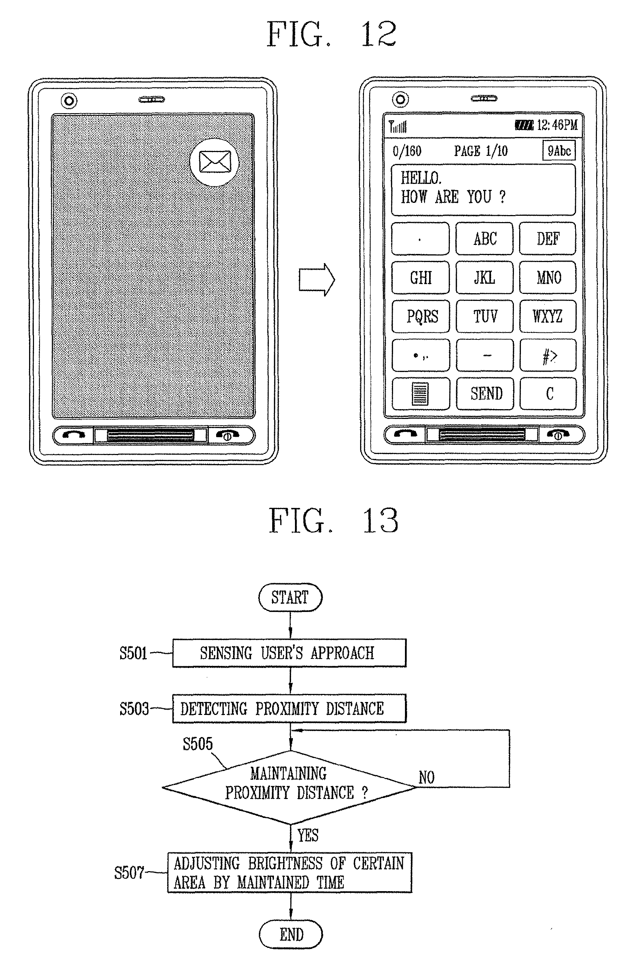

Figure 11 is a flowchart showing a screen control method of a mobile terminal according to another embodiment of the present invention, and Figure 12 is an exemplary view showing a display screen of the mobile terminal in Fig. 11.

If the user's touch or approach is sensed, the controller 180 adjusts (controls) brightness of a corresponding area (S401, S403). In the state that the brightness of the corresponding area is adjusted, the controller 180 checks whether or not the user's touch is sensed in the corresponding area (S405).

Based on the checked result, if a user's touch is sensed in the corresponding area, the controller 180 executes a function associated with the area where the touch is sensed, based on location information of the area where the user's touch is sensed (S407). The location information is provided by the display 151.

For instance, as shown in Fig. 12, when a message icon area becomes bright by a user's touch or approach, and if the user touches the message icon, the controller 180 executes a message function.

Here, the controller 180 controls (adjusts) the brightness by extending a scope of an area to be illuminated, from the certain area where the user's touch is sensed to the entire display screen of the display 151. That is, the mobile terminal 100 controls the brightness of the entire display screen of the display 151, not the brightness of a certain area of the display 151.

Figure 13 is a flowchart showing a screen control method of a mobile terminal according to still another embodiment of the present invention. This exemplary embodiment describes a case of controlling the brightness of a certain area according to a time for which a user's approach is being held.

Referring to Fig. 13, if a user's finger approaches the display 151 in order for a user to check information, the display 151 detects a distance (proximity distance) between the user's finger and the display 151 so as to notify the detected distance to the controller 180 (S501, S503). Here, the controller 180 operates the counter if the user's approach is sensed.

Upon receiving an inputting of the proximity distance outputted from the display 151, the controller 180 checks whether or not the proximity distance is maintained at a certain distance (S505). That is, the controller 180 checks whether or not the user's finger is spaced from the display 151 at a certain distance.

According to the checked result, if the proximity distance is maintained at a certain distance, the controller 180 may gradually brighten a certain area according to the maintained time (holding time) (S507). For instance, if a proximity distance is maintained to 0.3 cm, the longer the maintaining time, the brighter the area where the user's approach is sensed.

This exemplary embodiment has described that, in the holding state in which the user's finger is spaced from the display screen at a certain distance, the certain area becomes brighter in length of time. However, the above exemplary embodiment is not meant to be limiting. Alternatively, the brightness of a certain area may be controlled based on a proximity distance and if a certain period of time has elapsed while the proximity distance is maintained, a function associated with the certain area may be executed.

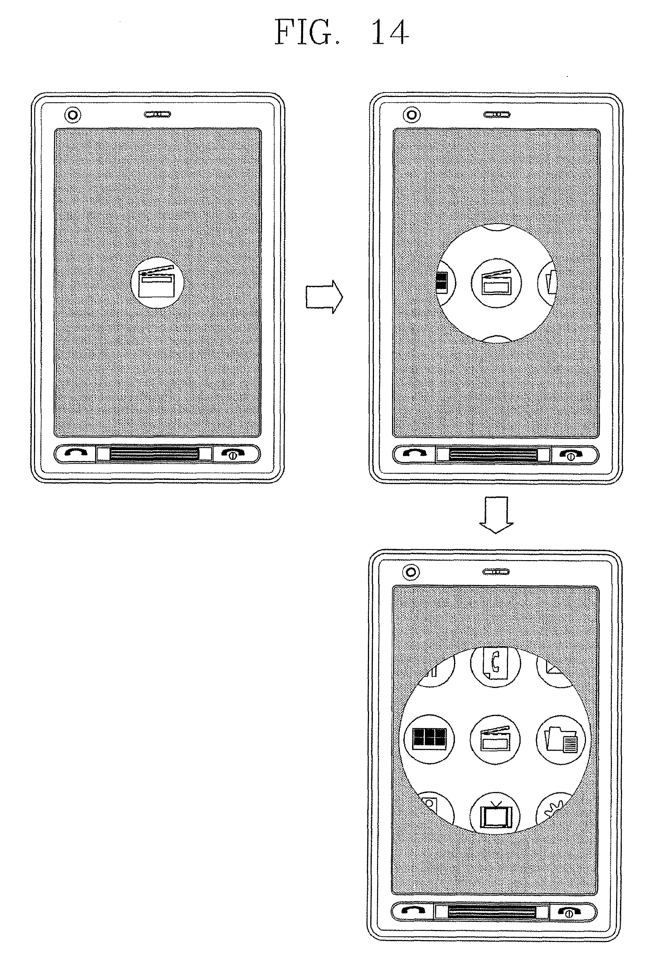

Figure 14 is an exemplary view showing a display screen of the mobile terminal according to still another embodiment of the present invention. This exemplary embodiment describes a case when an approach of the pointing means, together with an external key input, is sensed.

When a user manipulates an external key of the mobile terminal 100 and if the user's finger approaches the display 151, the controller 180 senses the user's approach through the display 151 and controls the brightness of the certain area. Here, the external key serves to set/release the searchlight function.

The controller 180 checks whether or not the proximity distance of the user varies. According to the checked result, if the proximity distance changes, the controller 180 gradually changes the size of the certain area based on the proximity distance of the user.

For instance, if the proximity distance of the user is reduced, the controller 180, as shown in Fig. 14, gradually extends the certain area where the user's approach is sensed. Then, if a touch is sensed in the certain area, the certain area may be extended to the entire display screen of the display 151.

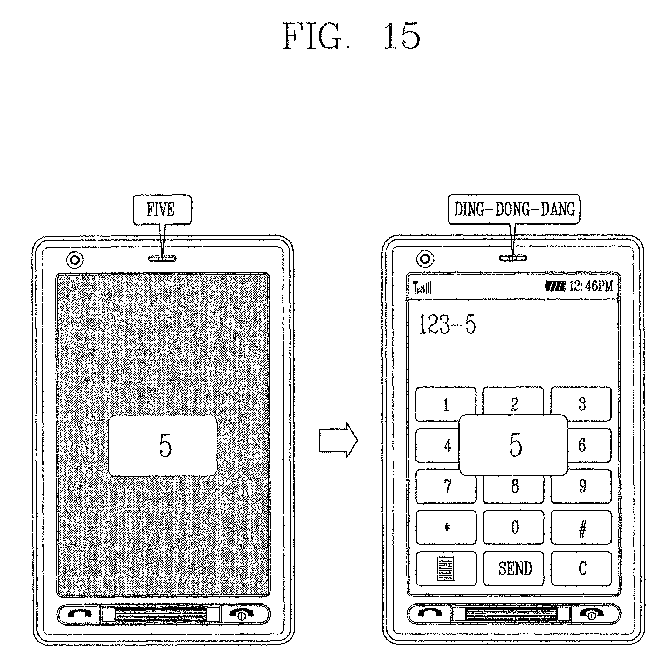

Figure 15 is an exemplary view showing a display screen of the mobile terminal according to still another embodiment of the present invention. This exemplary embodiment describes that if a user's touch is sensed, information associated with a certain area is converted for output into an audio signal.

Referring to Fig. 15, if a user's approach is sensed, the controller 180 controls brightness of a certain area of the display 151. Then, if a touch is sensed in the certain area, the controller 180 converts information displayed on the area where the touch is sensed into an audio signal, and outputs the same through the audio output module 152.

For instance, if a user's approach is sensed on an area where an icon '5' is located, the controller 180 controls the brightness of the corresponding area. Then, if a touch is sensed on the icon '5,' the controller 180 outputs an audio signal 'five' corresponding to the icon '5.' Here, the user checks the touched information through the audio signal. According to the checked result, if the information is not desired by the user, the user may select other information by using a pointing means without releasing the touch.

If the user's touch is released, the controller 180 outputs a confirmation sound notifying the completion of the touch input (e.g. 'ding-dong-dang') to the audio output module 152.

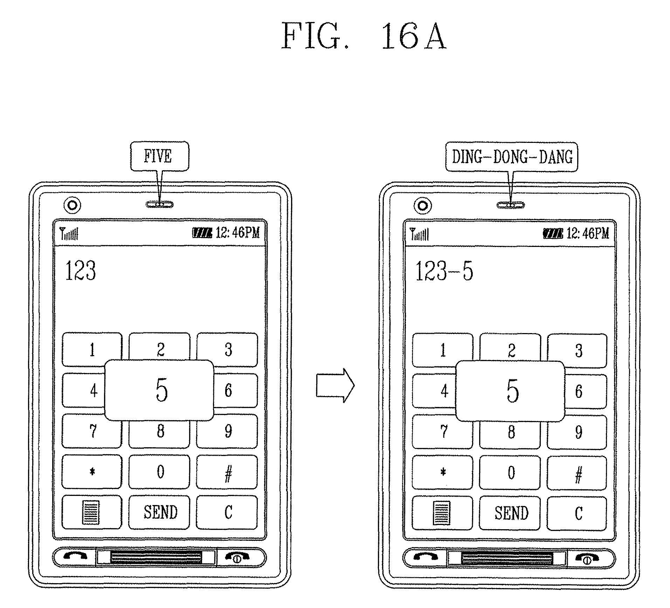

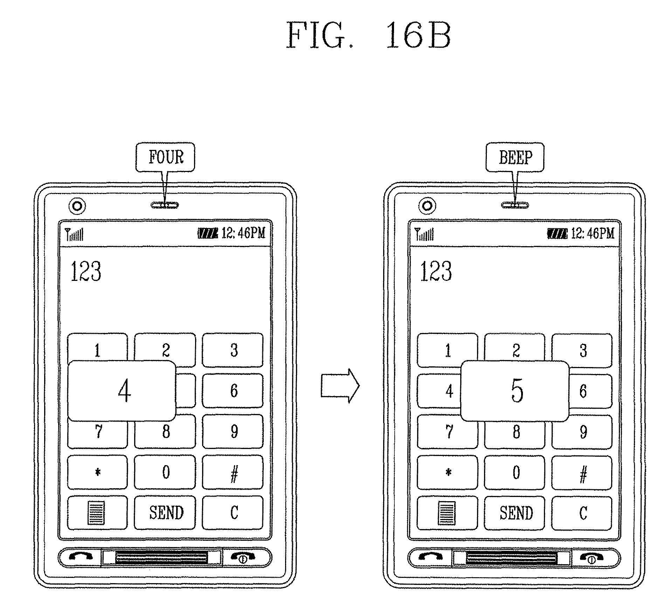

Figures 16A and 16B are respective exemplary views showing a display screen of a mobile terminal according to still another embodiment of the present invention. This exemplary embodiment describes a case of converting for output information associated with a certain area into an audio signal if a user's approach is sensed.

If a user's approach is sensed, the controller 180 converts and outputs information associated with a certain area into an audio signal. For instance, if a user's finger approaches an icon '4,' the controller 180 senses such approach through a sensor provided in the display 151 and then converts for output '4' into an audio signal 'four.' The user checks a location of his finger through the outputted audio signal. If the information is not desired by the user, the user moves his finger to a location where desired information is positioned.

If the user's finger is moved to a location where desired information is positioned, the user performs a touch operation. If the user's touch is sensed, the controller 180 checks whether information associated with the certain area is identical to the information previously converted into the audio signal.

According to the checked result, if the previously outputted audio signal 'five' is the same as the information '5' associated with the touched area, the controller 180, as shown in Fig. 16A, outputs the confirmation sound notifying that the touch input is accurately performed (e.g., "ding-dong-dang").

Conversely, if the previously outputted audio signal 'four' is not identical to the information '5' corresponding to the touched area, the controller 180, as shown in Fig. 16B, outputs an alerting sound notifying the erroneous input (e.g., 'beep') or vibration.

Therefore, the user may input information as desired, without looking at the display 151.

In an embodiment of the present invention, the above-described method can be implemented as software codes that can be read by a computer in a program-recorded medium. The computer-readable medium may include various types of recording devices in which data that can be read by a computer system is stored. The computer-readable medium may include a ROM, a RAM, a CD-ROM, a magnetic tape, a floppy disk, an optical data storage device, and the like. The computer-readable medium also includes implementations in the form of carrier waves (e.g., transmission via the Internet). In addition, the computer may include the controller 180 of the terminal.

The mobile terminal according to the present invention adjusts the brightness of a certain area if a touch or approach of the pointing means is sensed, allowing the user to selectively check information only associated with the certain area among information displayed on the display screen.

In addition, only a certain area where a touch or approach of a pointing means is sensed is illuminated, thereby entirely reducing an illumination of the display screen. Therefore, the user in a dark place, such as a movie theater, may check various information without disturbing other people, and prevent the leakage of personal information to other people.

Further, the present invention has a visual effect by gradually brightening or dimming a certain area according to a time for which a user's touch is maintained or a proximity distance, thereby providing fun and interest to the user.

The foregoing embodiments and advantages are merely exemplary and are not to be construed as limiting the present invention. The present teachings can be readily applied to other types of apparatuses. This description is intended to be illustrative, and not to limit the scope of the claims. Many alternatives, modifications, and variations will be apparent to those skilled in the art.

As the present invention may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal (100), comprising:
a display (151) for sensing a touch or approach of a pointing means; and
a controller (180) for controlling brightness of a certain area according to a proximity distance if the approach of the pointing means is sensed.

2. The mobile terminal (100) of claim 1, wherein the display (151) comprises:
a touch sensor (140) for sensing a touch by the pointing means; and
a proximity sensor (140) for sensing an approach of the pointing means.

3. The mobile terminal (100) according to any one of the preceding claims, wherein the controller (180) is arranged to control a power supply (190) to a backlight of the display (151) corresponding to the certain area so as to adjust the brightness of the certain area.

4. The mobile terminal (100) according to any one of the preceding claims, wherein the controller (180) is arranged to replace color of information displayed on another area, rather than the certain area, with color having brightness of a lower level.

5. The mobile terminal (100) according to any one of the preceding claims, wherein the controller (180) is arranged to gradually extend the certain area according to a time for which the proximity distance is maintained.

6. The mobile terminal (100) according to any one of the preceding claims, wherein the controller (180) is arranged to execute a certain function corresponding to the certain area if a certain period of time has elapsed from the time for which the proximity distance is maintained.

7. The mobile terminal (100) according to any one of the preceding claims, wherein the controller (180) is arranged to control the brightness of the certain area according to the time for which the touch by the pointing means is maintained.

8. The mobile terminal (100) according to any one of the preceding claims, wherein the controller (180) is arranged to execute a certain function corresponding to the certain area if a touch is sensed after the touch or approach of the pointing means.

9. A screen control method of a mobile terminal (100), comprising:
sensing (S101; S201) an approach or touch of a pointing means;
determining (S103; S203) at least one of the following: a distance between the pointing means and a display screen (151), and a time for which the touch is maintained; and
controlling (S105; S205) brightness of a certain area according to the determined distance or touch time.

10. The screen control method of claim 9, further comprising:
executing (S407) a certain function corresponding to the certain area if a touch is sensed in the certain area.

11. The screen control method according to any one of claims 9 to 10, wherein the step of controlling the brightness of the certain area comprises converting for output information associated with the certain area into an audio signal.

12. The screen control method according to any one of claims 9 to 11, wherein the step of controlling the brightness comprises
counting a holding time if the calculated distance is being held; and
gradually extending the certain area according to the counted holding time.

13. The screen control method according to any one of claims 9 to 12, further comprising:
dimming (S207) the brightness of the certain area if the touch is released.
